# EUROPEAN PATENT SPECIFICATION

(11) **EP 0 523 869 B1**
(45) Date of publication and mention of the grant of the patent: **21.02.1996**
(21) Application number: 92305828.3
(22) Date of filing: 24.06.1992
(51) Int. Cl.: F16H 7/12

(54) **Belt noise/vibration control mechanism**
Vorrichtung zur Unterdrückung von Riemengeräuschen und -schwingungen
Dispositif de contrôle du bruit et des vibrations d'une courroie

(30) Priority: 27.06.1991 US 722734
(43) Date of publication of application: 20.01.1993
(73) Proprietor: XEROX CORPORATION, Rochester New York 14644 (US)
(72) Inventor: Wong, Chee-Chiu Joseph, Fairport NY 14450 (US); Sanborn, Walter J., West Henrietta, West Henriette NY 14586 (US)
(74) Representative: Goode, Ian Roy

(56) References cited:
- WO-A-91/00969
- FR-A- 1 346 804
- FR-A- 1 569 182
- US-A- 1 847 720

## Description

This invention relates to a belt noise control mechanism for use in a wide variety of machines, for example, copier/printers.

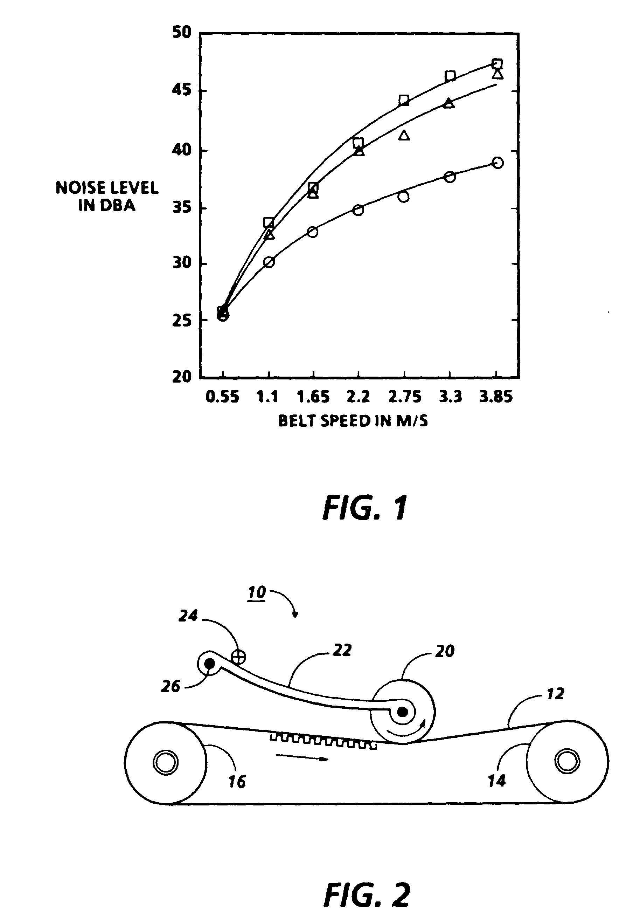

Excessive noise from machines, such as, copier/printers in working environments has been an irritant to users from the advent of such machines until the present day. One of the major contributors to machine noise has been found to be idlers of timing belt systems. At low speed, noise from idlers is as high as that of the timing belt and pulley system combined. At higher speeds, the noise level of an idler has been found to be an order of magnitude higher as shown in Figure 1. This is because typical idler systems found in copiers, printers, duplicators, etc., will not only generate noise, but tend to transmit and in some cases amplify the vibratory energy of the belts to the machine frame and covers. This undesirable mechanical energy is radiated as noise. A need clearly exists for a means to control noise in machines.

Previous belt drive systems include US-A- 2,913,192 which is directed to a tape drive mechanism for driving tapes under constant tension and speed. A resilient flexing spring bent into a curve allows the tape to travel accurately to a recording head. The spring permits compliance in one degree of freedom and appears to be suitable for only light tension applications. A multi-lever and multi-spring system to slow down a portion of a belt temporarily while keeping the rest of the belt at a different speed is disclosed in US-A-4,869,707. A locking assembly for a photoreceptor belt is shown in US-A-4,983,146 in which a spring is used to provide an initial tension and the assembly is locked down by a locking arm. After the locking mechanism is engaged, the spring is not functioning. However, rigidly locking a belt as disclosed in this patent appears to cause unwanted and excessive noise and vibrations. US-A- 4,459,123 discloses the arrangement of a single or multiple belt system for maximum drive efficiency. The drive machinery that requires the most torque is located closest to the driving unit. Additional drive units are placed in descending order according to the magnitudes of the drive torques. WO-A-91/00969 which seems to form the closest prior art, discloses a belt tensioning arrangement which uses a coiled torsion spring to urge an arm carrying an idler roll into engagement with a belt. The belt tensioner has an arm plate means which has an extension disposed around the arm and is fastened to housing means of the tensioner in such a manner that the arm plate means tends to prevent adverse cocking of the belt engaging arm on its shaft means. Therefore, settable means are provided for frictionally clampen the rotary movement of the belt engaging arm relative to the support means. Further means provide limited rotary movement of the arm.

In view of these patents, a need clearly still exists for a means to control noise in machines.

It is an object of the present invention to reduce the noise level of a belt drive system.

The present invention achieves this object by providing a belt drive system in accordance with claim 1.

Accordingly, disclosed herein is an apparatus for controlling noise and vibration actively and/or passively in a belt drive system that comprises a damping element connected to an idler and appropriate mounting structure. The damping element which is a tuned damping element, cancels and/or isolates the source of noise and/or vibration energy that would otherwise be generated, transmitted, propagated and amplified throughout the belt drive system.

A belt drive system in accordance with the invention will now be described, by way of example, with reference to the accompanying drawings, in which:-

FIG. 1 is graph showing test results according to a prior art belt drive system.

FIG. 2 is a schematic view illustrating a belt drive system utilizing a damping idler arm in accordance with the present invention.

FIG. 3 is a graph showing the test results obtained from testing the apparatus of FIG. 2.

Belt drive systems in the past that incorporated idlers and timing belts have experienced noise problems whether they were used at low speeds or high speeds. For example, the graph in FIG. 1 shows noise level of an idler vis-a-vis that of a belt and pulley with the noise level of the idler being much higher than that of both the belt and pulley. Even at low speeds, the noise level of the idler is higher than that of belt and pulley combined. In FIG. 1, the torque applied was 0.1N-M, the normal force applied to the belt by the idler is shown as Δ=1N, □=2N with the pulley center distance being 290 mm. The noise level of the belt and pulley is represented by the curves marked with circles.

To reduce idler noise, an apparatus 10 is shown in FIG. 2 that comprises an idler system with tuned damping capability. In the FIG. 2, arrangement of a drive system for a machine, a single endless timing belt 12 is shown, which transmits drive power from a drive pulley 14, which in turn drives a driven pulley 16. An idler 20 is biased against timing belt 12 in an unsupported span between pulleys 14 and 16 by an idler arm 22 with tuned damping that is made of Nylon® since Nylon® has a relatively high damping coefficient. Materials other than Nylon® could be used for damping purposes, if desired. Idler arm 22 is supported for pivoted movement on support shaft/pin 26. A hard stop 24 is included to control maximum positioning of idler arm 22. Any hard stop means could be used, for example, they can be built into support 26 by use of a "D" hole. Idler arm 22 can be of any desired configuration as long as it provides the support and resilience in up to six degrees of freedom at the center of the idler roll 20. Six degrees of freedom is used herein to mean displacement in the directions of three axes orthogonal to each other and rotation around these three orthogonal axes. This attenuates the undesirable vibrating energy and reduces noise. An additional benefit of the idler noise control configuration in FIG. 2 is that the physical, chemical and mechanical properties including the materials of the tuned damping element can be optimized to provide active damping to attenuate the vibration of the belt system. The term tuned damping is used herein to indicate the control of noise and vibration through physical (shape), chemical or mechanical means. In contrast to tuned damping element 22, traditional idler systems consist of a rigid support arm and a spring which may be a wrap spring or an extension spring.

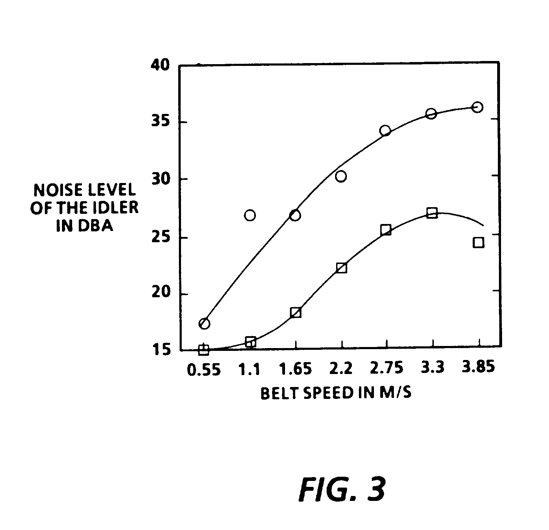

The system of FIG. 2 was tested with different idler configurations, such as, straight crown, solid, spoke and idlers with sleeves, etc. and they all showed marketed noise abatement improvement over existing design configurations. The test results shown in FIG. 3 were obtained using a solid idler having an outside diameter of 20 mm and a width of 13 mm. With this idler, a noise improvement of up to 12 dBA (i.e. 97%) was obtained. The upper curve (marked with circles) and the lower curve (marked with squares) in the figure represent the noise levels of an existing system and the tuned damping system, respectively. The center of support shaft to center of idler length of tuned damping arm 22 was 56 mm and center of hard stop to center of idler distance was 44 mm for the test.

As will be readily understood from the foregoing description, in the belt drive and idler mounting arrangement according to the present invention, noise abatement is attained by including a tuned damping element attached to idlers operating on timing belts. This control mechanism reduces noise by providing the support and resiliency required for the idler operation. The tuned damping element is usable with roll systems, as well as belt and drive systems. Belt and drive systems include, but are not limited to, flat belts, timing belts, V-belts, chain drives and some gear drives. It is also applicable to all tensioning devices. An advantage of the tuned damping element is that it allows self alignment at the point(s) of application(s).

## Claims

1. A belt drive system that includes a belt (12) entrained around spaced apart drive and driven rolls (14, 16) and a center supported idler roll (20) biased into the space between the drive and driven rolls (14,16) to tension the belt (12), the belt drive system comprising :
a single part damping arm (22) pivotally mounted (26) at one end and carrying the idler roll (20) at its other end, the damping arm (22) having a tuned damping capability and being adapted to absorb mechanical energy created by the operation of the belt system and thereby reduce the noise level of the belt drive system; and
stop means (24) for limiting pivotal movement of said damping arm (22).

2. The belt drive system of claim 1 wherein said damping arm (22) provides support and resilience in up to six degrees of freedom around the center support of the idler roll (20).

3. The belt drive system of claim 1 or claim 2, wherein the damping arm (22) is of Nylon®.

## Patentansprüche

1. Riemenantriebssystem, das einen Riemen (12), der um zueinander beabstandete Antriebs- und angetriebene Rollen (14, 16) geführt ist, und eine in der Mitte getragene Spannrolle (20), die in einen Raum zwischen der Antriebs- und angetriebenen Rolle (14, 16) vorgespannt ist, um den Riemen (12) zu spannen, umfaßt, wobei das Riemenantriebssystem aufweist:
einen einteiligen Dämpfungsarm (22), der schwenkbar (26) an einem Ende befestigt ist und die Spannrolle (20) an seinem anderen Ende trägt, wobei der Dämpfungsarm (22) eine abgestimmte Dämpfungsfähigkeit besitzt und dazu geeignet ist, mechanische Energie zu absorbieren, die durch den Betrieb des Riemensystems erzeugt wird, und um dadurch den Geräuschpegel des Riemenantriebssystems zu reduzieren; und
eine Anschlageinrichtung (24) zum Begrenzen der Schwenkbewegung des Dämpfungsarms (22).

2. Riemenantriebssystem nach Anspruch 1, wobei der Dämpfungsarm (22) einen Träger und eine Elastizität bis zu sechs Freiheitsgraden um den Mittenträger der Spannrolle (20) bildet.

3. Riemenantriebssystem nach Anspruch 1 oder Anspruch 2, wobei der Dämpfungsarm (22) aus Nylon^{R} ist.

## Revendications

1. Système de commande par courroie qui comprend une courroie (12) passant autour de galets menant et mené espacés (14, 16) et un galet-tendeur supporté de façon centrale (20) poussé dans l'espace séparant les galets menant et mené (14, 16) afin de tendre la courroie (12), le système de commande par courroie comprenant :
un bras d'amortissement en une seule pièce (22) monté en pivotement (26) au niveau d'une première extrémité et portant le galet-tendeur (20) au niveau de son autre extrémité, le bras d'amortissement (22) étant doté d'une capacité d'amortissement accordé et étant conçu pour absorber l'énergie mécanique engendrée par le fonctionnement du système à courroie et réduire ainsi le niveau de bruit du système de commande par courroie, et
des moyens de butée (24) pour limiter le mouvement pivotant dudit bras d'amortissement (22).

2. Système de commande par courroie selon la revendication 1, dans lequel ledit bras d'amortissement (22) procure un support et une résilience dans jusqu'à six degrés de liberté autour du support central du galet-tendeur (20).

3. Système de commande par courroie selon la revendication 1 ou la revendication 2, dans lequel le bras d'amortissement (22) est fait de Nylon®.
